# EUROPÄISCHE PATENTSCHRIFT

(11) **EP 1 510 388 B1**
(45) Veröffentlichungstag und Bekanntmachung des Hinweises auf die Patenterteilung: **30.05.2012**
(21) Anmeldenummer: 04020343.2
(22) Anmeldetag: 27.08.2004
(51) Int. Cl.: B60J 7/00, B60R 13/00

(54) **Fahrzeugdach**
Vehicle roof
Toit de véhicule

(30) Priorität: 28.08.2003 DE 10340022
(43) Veröffentlichungstag der Anmeldung: 02.03.2005
(73) Patentinhaber: Webasto AG, 82131 Stockdorf (DE)
(72) Erfinder: Schönauer, Miriam, 85049 Ingolstadt (DE); Birkner, Joachim, 82178 Puchheim (DE); Kölbl, Michael, 82061 Neuried (DE); Lang, Alexander, 81541 München (DE); Muttenhammer, Rudolf, 82110 Germering (DE); Pollak, Martin, 82178 Puchheim (DE); Schwaighofer, Ralf, 83115 Neubeuern (DE); Wulf, Friedhelm, 81243 München (DE); Cocaign, Jean-Guy, Rochester, MI 48307 (US)
(74) Vertreter: Fischer & Konnerth

(56) Entgegenhaltungen:
- EP-A2- 1 151 881
- EP-A2- 1 180 471
- DE-C1- 19 910 950
- DE-C1- 19 937 221

## Beschreibung

Die Erfindung betrifft Fahrzeugdächer mit einer Dachplatte aus Kunststoff oder einem öffnungsfähigen Deckel aus Kunststoff.

Es sind Panoramaglasdächer bekannt, die einen Rahmen aufweisen, auf den eine Festglasscheibe aufgeklebt ist. Nachteilig ist hierbei, dass ein eigener Klebeprozess für die Festglasscheibe erforderlich ist und dass sichtbare Fugen im Übergang zu Durchsichtsbereichen unvermeidlich sind. Außerdem muss für jede Funktion, die zusätzlich vorgesehen werden soll, mindestens ein weiteres Bauteil hergestellt und montiert werden.

Aus der EP 1 180 471 A2 ist ein Fahrzeugdachmodul bekannt, bei dem an die Unterseite einer Dachhaut zwei seitliche Rahmenteile und ein vorderes und ein hinteres Rahmenteil angeschäumt werden.

Aus der DE 298 14 743 U1 ist eine Kunststoffscheibe für Fahrzeugdächer bekannt, bei der in einem verdickten, nach unten vorspringenden Randbereich Versteifungs- und Befestigungsteile mit eingespritzt oder eingeschäumt sind.

Aus der DE 196 42 648 A1 ist bekannt, einen verdickten Randbereich einer Fahrzeugscheibe zur optischen Kaschierung aus einem eingetrübten oder eingefärbten Granulat herzustellen, das in derselben oder in einer zusätzlichen Komponente der Kunststoffscheibe enthalten ist.

Aus der DE 34 29 880 A1 ist ein Fahrzeugdach gemäß dem Oberbegriff des Anspruchs 1 bekannt geworden, das als vormontierte Baugruppe bzw. Dachmodul ausgebildet ist. Das Dachmodul ist durch Schnappverschlüsse mit der Karosserie verbindbar. Damit sind zwar gewisse Montageerleichterungen möglich, jedoch sind die erzielbaren Effizienzsteigerungen begrenzt.

Aus der EP 0 164 532 A2 ist ein Sonnendach mit einem transparenten Deckel für Fahrzeuge bekannt geworden, bei dem eine auf- und aufwickelbare Rollovorrichtung vorgesehen ist, die unterhalb des Deckels aufspannbar ist. Die Aufwickelvorrichtung für die Rollovorrichtung ist in eine mehrteilige Haltevorrichtung integriert, die den Deckel hält und an dem Fahrzeugaufbau angeklemmt ist. Dieses Sonnendach umfasst viele verschiedene Teile und ist daher aufwändig zu montieren.

Die DE 43 21 915 C1 offenbart streifenförmige Seitenblenden zum mindestens teilweisen Abdecken von Randspalten, die zwischen den seitlichen Rändern eines ausgestellten Glasdeckels von Schiebedächern oder Schiebehebedächern und der festen Dachhaut an Fahrzeugen gebildet werden. Die Seitenblenden sind an einem Einfassrahmen angeformt, mit dem der Glasdeckel umschäumt ist. Auch bei diesen Schiebedächern ist die Anzahl der herzustellenden Teile groß und erfordert einen nicht unerheblichen Fertigungsaufwand.

Aufgabe der Erfindung ist es, ein Fahrzeugdach zu schaffen, bei dem die Anzahl der herzustellenden und zu montierenden Bauteile reduziert werden kann und somit die Montage- und Logistikkosten reduziert werden können.

Diese Aufgabe wird durch ein Fahrzeugdach gemäß Anspruch 1 gelöst.

Vorteilhafte Ausgestaltungen der Erfindung sind Gegenstand der Unteransprüche.

Im Rahmen dieser Erfindung sollen unter der Bezeichnung "Dachplatte" die verschiedensten Flächen oberhalb der Gürtellinie des Fahrzeugs verstanden werden. Hierzu zählen beispielsweise auch eine Heckscheibe oder eine Heckklappe. Nachfolgend werden Ausführungsbeispiele des erfindungsgemäßen Fahrzeugdaches unter Bezugnahme auf die Zeichnung näher erläutert. Es zeigen:
- Fig. 1a: eine schematische perspektivische Ansicht einer ersten Ausführungs- form eines Fahrzeugdaches von links hinten und Fig. 1b einen Schnitt in Fahrzeuglängsrichtung,
- Fig. 2a: eine schematische perspektivische Ansicht einer zweiten Ausführungs- form eines Fahrzeugdaches von links hinten und Fig. 2b eine vergrö- ßerte perspektivische Teildarstellung von Fig. 2a,
- Fig. 3a: eine schematische perspektivische Ansicht einer dritten Ausführungs- form eines Fahrzeugdaches von links vorne und Fig. 3b eine vergrö- ßerte Darstellung eines Teilschnittes längs C-C in Fig. 3a,
- Fig. 4a: eine schematische perspektivische Ansicht einer vierten Ausführungs- form eines Fahrzeugdaches von links vorne und Fig. 4b bis 4d im Schnitt längs D-D in Fig. 4a verschiedene Varianten zu Fig. 4a, und
- Fig. 5a: eine schematische perspektivische Ansicht einer vierten Ausführungs- form eines Fahrzeugdaches von links vorne und Fig. 5b eine Darstel- lung eines Schnittes längs E-E in Fig. 5a.

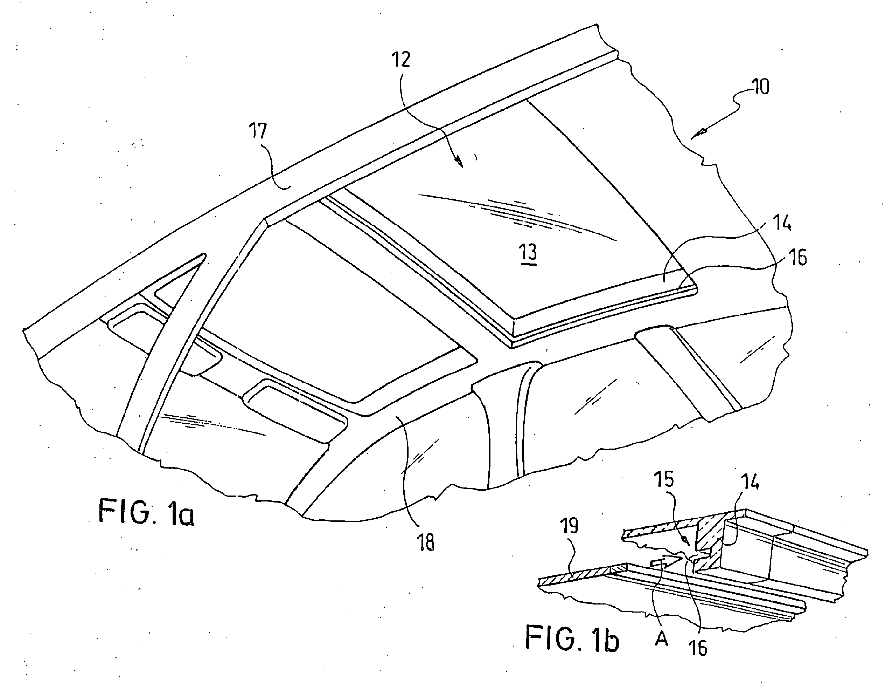

Ein erfindungsgemäßes Fahrzeugdach 10 umfasst gemäß Fig. 1 a in einer ersten Ausführungsform eine Dachplatte 12 aus Kunststoff, insbesondere Polycarbonat, die die Dachfläche zwischen dem linken Seitenholm 17 und dem rechten Seitenholm 18 abdeckt. Die Dachplatte 12 weist einen transparenten Bereich 13 wie beispielsweise einen festen oder beweglichen Deckel auf, der die Sicht aus dem Fahrzeuginnenraum nach außen ermöglicht. Es ist eine Sonnenschutzanordnung 19 - beispielsweise ein Sonnenrollo oder ein Schiebehimmel - vorgesehen (vgl. Fig. 1 b), die mittels einer nicht dargestellten Bewegungsmechanik zwischen einer Offenstellung und einer Schließstellung verstellbar ist. In der Offenstellung ist die Sicht durch den transparenten Bereich 13 hindurch aus dem Fahrzeuginnenraum nach außen möglich, und in der Schließstellung verhindert die Sonnenschutzanordnung 19 den Eintritt von Sonnenlicht durch den transparenten Bereich 13 oder reduziert ihn zumindest stark. In die Dachplatte 12 ist eine den transparenten Bereich 13 umgebende Blende 14 in Form eines sich nach unten erstreckenden umlaufenden Randes integriert, wobei die Blende 14 die Bewegungsmechanik der Sonnenschutzanordnung 19 und/oder eine Mechanik eines bewegbaren Deckels abdeckt.

Auch die Blende 14 ist aus Kunststoff hergestellt, und sie ist einstückig mit dem transparenten Bereich 13 ausgebildet, d. h., an dem transparenten Bereich 13 angeformt. In der Blende 14 ist eine Aufnahme- und Führungsanordnung 15 für die Sonnenschutzanordnung 19 integriert, die gemäß Darstellung in Fig. 1b als Nut 16 ausgebildet ist. Vorzugsweise ist die Nut 16 umlaufend ausgebildet, wie aus Fig. 1 a ersichtlich ist. Wenn die Sonnenschutzanordnung 19 als Beispiel ein Sonnenrollo ist, das vor dem vorderen Ende des transparenten Bereichs 13 auf einer nicht dargestellten Aufwickelvorrichtung aufwickelbar ist, wird das Sonnenrollo beim Ausziehen nach hinten (vgl. Pfeil A in Fig. 1 b) in den in Fahrzeuglängsrichtung verlaufenden Teilen der Nut 16 geführt, und am Ende des Ausziehvorgangs wird das hintere Ende des Rollos in dem nur in Fig. 1b dargestellten hinteren, in Fahrzeugquerrichtung verlaufenden Teil der Nut 16 aufgenommen.

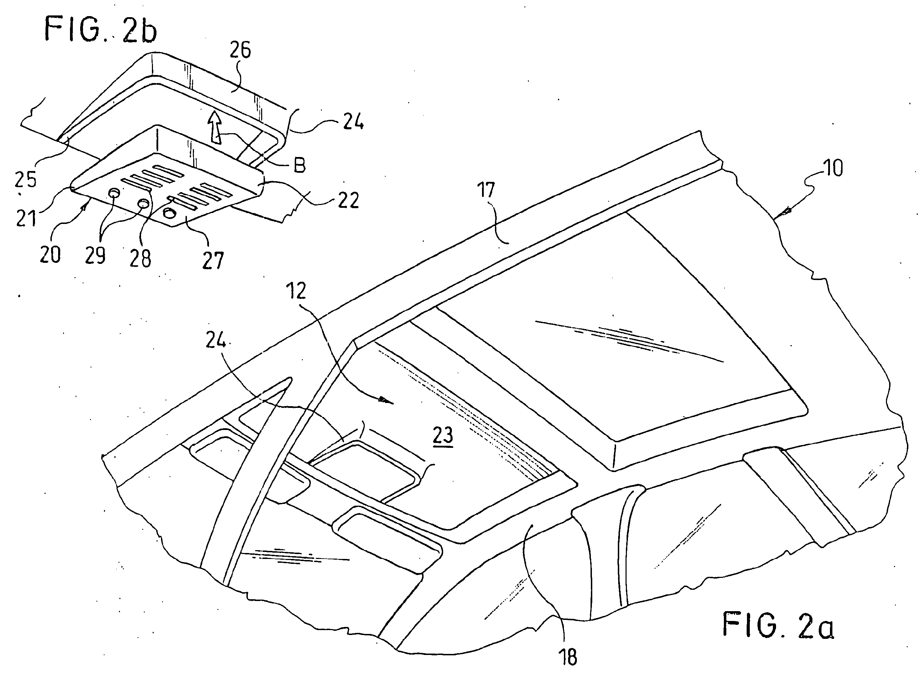

In einer zweiten Ausführungsform umfasst das erfindungsgemäße Fahrzeugdach 10 eine die Dachfläche zwischen den Seitenholmen 17 und 18 abdeckende Dachplatte 12 aus Kunststoff. Die Dachplatte 12 umfasst einen - sich in der Darstellung von Fig. 2a hinter dem Windlauf anschließenden - nicht-transparenten Bereich 23. An der Unterseite des nicht-transparenten Bereichs 23 ist ein Aufnahmerahmen 24 aus Kunststoff für ein Funktionselement 20 angeformt. Ein solches Funktionselement kann beispielsweise eine Bedienungskonsole 27 für die Betätigung einer Heckklappe, einer Sonnenschutzanordnung oder eines Schiebedaches mittels Bedienungstasten 29 sein. Das Funktionselement 20 kann auch eine Beleuchtungseinrichtung 28 sein, eine solche enthalten oder aus einer Ablage bestehen.

Die Funktionseinrichtung 20 kann bei ihrem vorderen Ende 21 an der Vorderseite 25 des Aufnahmerahmens 24 angelenkt und mit ihrem hinteren Ende 22 nach unten schwenkbar sein. Das hintere Ende 22 ist dabei im Bereich der Hinterseite 26 des Aufnahmerahmens 24 einrastbar. Alternativ kann das Funktionselement 20 als Ganzes aus dem Aufnahmerahmen 24 entfernbar und in Richtung des Pfeils B in Fig. 2b in den Aufnahmerahmen 24 einsetzbar, beispielsweise durch Einrasten, sein.

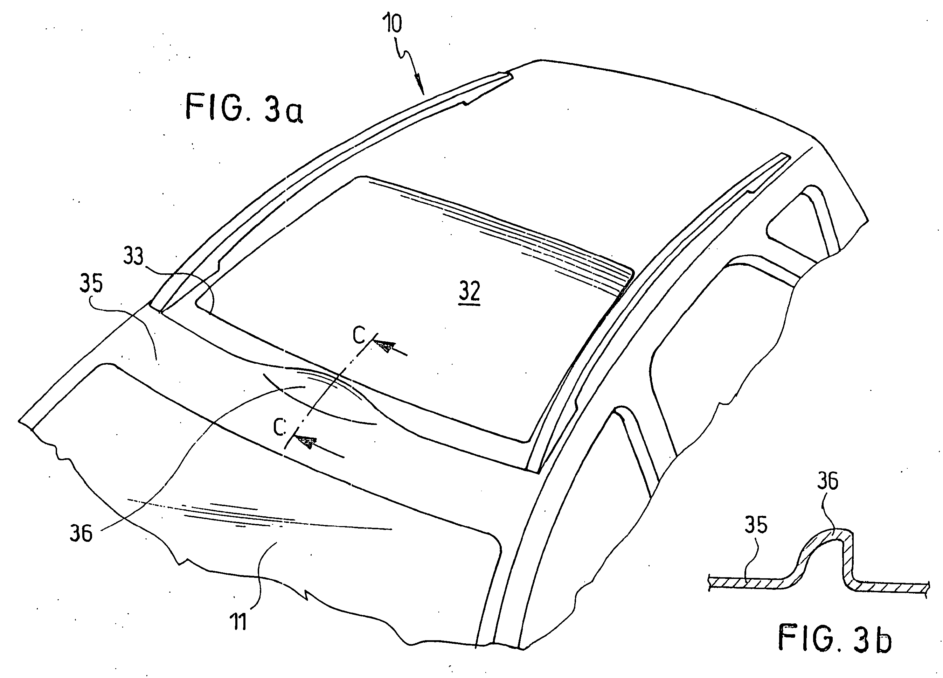

In einer dritten Ausführungsform (siehe Fig. 3a und 3b) weist das erfindungsgemäße Fahrzeugdach 10 einen öffnungsfähigen Deckel 32 auf, der sich hinter einem Windlauf 35 aus Kunststoff befindet. Am hinteren Ende des Windlaufs 35 ist in Fahrzeugmitte ein Windabweiser 36 aus Kunststoff angeformt, der zur Vermeidung von Wummergeräuschen dient. Abweichend von der Darstellung in Fig. 3a können auch mehrere Windabweiser 36 vorgesehen sein. Der Windabweiser 36 weist im Längsschnitt (Schnitt längs C-C in Fig. 3a) das in Fig. 3b gezeigte Profil auf. Die Vorderseite des Windabweisers 36 ist dabei mit einer für die Aerodynamik günstigen geschwungenen Form ausgebildet, während dessen Rückseite im wesentlichen senkrecht zur Oberfläche des Windlaufs 34 steht. Dadurch kann die Einheit aus Windlauf 35 und Windabweiser 36 in einfacher Weise aus einem entsprechenden Formwerkzeug ausgeformt werden. Falls die Rückseite einen Hinterschnitt aufweist, ist das Ausformen nur mit mindestens einem zusätzlichen Schieber möglich.

Es kann besonders vorteilhaft sein, den Windlauf 35 mit dem Windabweiser 36 zusammen mit der Frontscheibe 11 aus dem gleichen Kunststoff im gleichen Arbeitsgang auszubilden. Dies ermöglicht eine Reduzierung der Herstellungskosten.

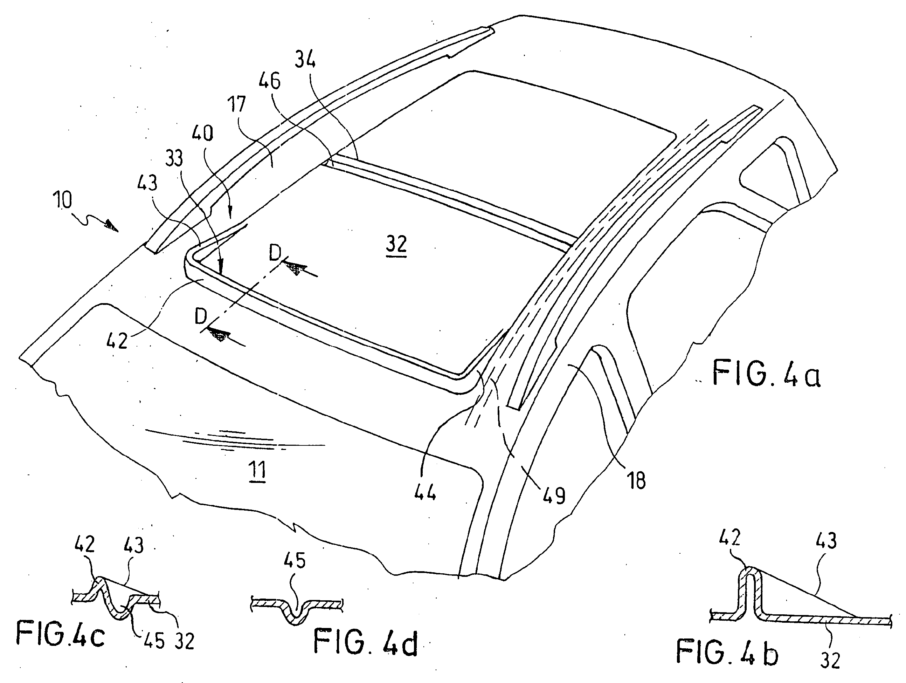

Bei einer vierten Ausführungsform (siehe Fig. 4a bis 4d) des erfindungsgemäßen Fahrzeugdaches 10 ist ein öffnungsfähiger Deckel 32 aus Kunststoff vorgesehen, an dessen Oberseite eine Wasserabführungseinrichtung 40 integriert ist. In Fig. 4a ist eine erste Variante dieser Wasserabführungseinrichtung 40 dargestellt. Sie umfasst einen Wulst 42, der am vorderen Ende 33 des Deckels 32 angeformt ist und nach oben ragt. Den Wulst 42 erstreckt sich über die gesamte Breite des Deckels 32. An den beiden Querenden des Wulstes 42 schließt sich ein rechter Wulstfortsatz 43 und ein linker Wulstfortsatz 44 an, die sich in Fahrzeuglängsrichtung nach hinten erstrecken. Die Höhe der Wulstfortsätze 43, 44 nimmt von vorn nach hinten ab, und die Oberseite der Wulstfortsätze geht bündig in die Oberseite des Deckels 32 über. Das Profil des Wulstes 42 ist schematisch in Fig. 4b dargestellt. Mit der erfindungsgemäßen Wasserabführungseinrichtung 40 kann zuverlässig verhindert werden, dass Wasser, das sich auf dem Deckel 32 angesammelt hat, in den Fahrzeuginnenraum laufen kann, wenn der Deckel 32 mit seiner Hinterkante nach oben ausgestellt oder unterhalb des Fahrzeugdaches 10 nach hinten verfahren wird.

Zusätzlich zu dem Wulst 42 kann als weitere Variante gemäß Darstellung in Fig. 4c eine hinter dem Wulst 42 liegende Vertiefung 45 vorgesehen sein, die sich gegebenenfalls auch längs der Wulstfortsätze 43, 44 erstreckt. Alternativ kann statt der Wulste 42 bis 44 nur eine Vertiefung 45 vorgesehen sein, die als Wasserrinne dient. Um auch das hintere Ende 34 des Deckels 32 mit einem Schutz vor in den Fahrzeuginnenraum laufendem Wasser zu versehen, ist es zweckmäßig, dort eine Wasserrinne 46 vorzusehen. Das Wasser, das sich an den Wulsten 42 bis 44 oder in der Wasserrinne 46 sammelt, kann bei zumindest teilweise geöffnetem Deckel 32 seitlich in hierfür vorgesehene Wasserschienen abfließen. Im linken Seitenholm 17 ist schematisch eine Wasserschiene 49 angedeutet.

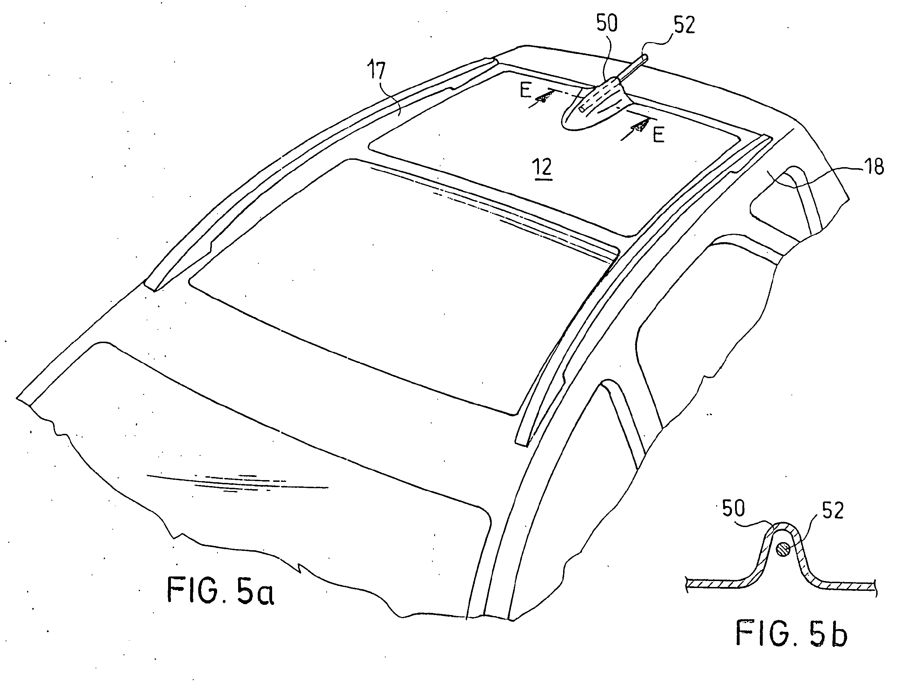

Bei einer fünften erfindungsgemäßen Ausführungsform (siehe Fig. 5a und 5b) ist an eine Dachplatte 12 aus Kunststoff eine Aufwölbung 50 aus Kunststoff angeformt, die als Verkleidung oder als Halterung für eine Antenne 52 dient. Das Profil der Aufwölbung 50 ist schematisch in Fig. 5b dargestellt, die einen Querschnitt längs E-E in Fig. 5a zeigt.

Die vorgenannten Komponenten sind - wie bereits erwähnt - aus Kunststoff, insbesondere aus einem gegebenenfalls transparenten Polycarbonat, hergestellt. Daher ist es problemlos möglich, ihnen die gewünschte Form zu geben und sie als ein Stück in einem einzigen Werkzeug herzustellen. Dadurch können Funktionen integriert werden, die bei einem Glasdeckel jeweils eigene Teile benötigen. Diese Art der einstückigen Herstellung ist - jedenfalls mit der derzeitigen Fertigungstechnologie - mit einer Dachplatte aus Glas nicht erzielbar; somit mussten bisher die einzelnen Komponenten an dem entsprechenden Glasdach oder an anderen Dachelementen angeschraubt werden.

Es ist festzuhalten, dass die unter Bezug auf einzelne Ausführungsformen beschriebenen Merkmale der Erfindung, wie beispielsweise Sonnenschutzanordnung, Funktionselement, Windabweiser, Wasserabführungseinrichtung und Antennenhalterung bzw. Antennenverkleidung, auch bei anderen Ausführungsformen vorhanden sein können, außer wenn es anders angegeben ist oder sich aus technischen Gründen von selbst verbietet.

### Bezugszeichenliste

- 10: Fahrzeugdach
- 11: Frontscheibe
- 12: Dachplatte
- 13: transparenter Bereich
- 14: Rand/Blende
- 15: Aufnahme- und Führungsan- ordnung
- 16: umlaufende Nut
- 17: Seitenholm
- 18: Seitenholm
- 19: Sonnenschutzanordnung
- 20: Funktionselement
- 21: vorderes Ende (von 20)
- 22: hinteres Ende (von 20)
- 23: nicht-transparenter Bereich
- 24: Aufnahmerahmen
- 25: Vorderseite (von 24)
- 26: Hinterseite (von 24)
- 27: Bedienungskonsole
- 28: Beleuchtungseinrichtung
- 29: Bedienungstasten
- 32: öffnungsfähiger Deckel
- 33: vorderes Ende (von 32)
- 34: hinteres Ende (von 32)
- 35: Windlauf
- 36: Windabweiser
- 40: Wasserabführungseinrichtung
- 42: Wulst
- 43,44: Wulstfortsätze
- 45: Vertiefung
- 46: Wasserrinne
- 49: Wasserschiene
- 50: Aufwölbung
- 52: Antenne
- A: Verschiebungsricht. (von 19)
- B: Einsetzrichtung (von 20)

## Patentansprüche

1. Fahrzeugdach mit einer Dachplatte (12),
die einen transparenten Bereich (13) aus Kunststoff aufweist, an den ein sich nach unten erstreckender umlaufender, insbesondere als Abdeckblende dienender, einstückig in die Dachplatte integrierter Rand (14) aus Kunststoff angeformt ist, wobei in den Rand (14) eine Aufnahme- und Führungsanordnung (15) für eine Sonnenschutzanordnung (19) integriert ist,
die mittels einer Bewegungsmechanik zwischen einer die Sicht durch den transparenten Bereich (13) nach außen freigebenden Offenstellung und einer die Einstrahlung von Sonnenlicht durch den transparenten Bereich (13) ins Fahrzeuginnere reduzierenden Schließstellung verstellbar ist, wobei der Rand (14) die Bewegungsmechanik der Sonnenschutzanordnung (19) abdeckt, der Rand (14) den transparenten Bereich (13) umgibt und die Aufnahme- und Führungsanordnung (15) als umlaufende Nut (16) in dem Rand (14) ausgebildet ist.

2. Fahrzeugdach nach einem der vorhergehenden Ansprüche,
**dadurch gekennzeichnet, dass** die Dachplatte (12) einen nicht-transparenten Bereich (23) aufweist, an dessen Unterseite ein Aufnahmerahmen (24) für ein Funktionselement (20) angeformt ist.

3. Fahrzeugdach nach einem der vorhergehenden Ansprüche,
**dadurch gekennzeichnet, dass** es einen öffnungsfähigen Deckel (32) sowie einen Windlauf (35) aus Kunststoff aufweist, wobei an dem Windlauf (35) mindestens ein Windabweiser (36) angeformt ist.

4. Fahrzeugdach nach einem der vorhergehenden Ansprüche,
**dadurch gekennzeichnet, dass** es einen öffnungsfähigen Deckel (32) aus Kunststoff aufweist, an dessen Oberseite eine Wasserabführungseinrichtung (40) integriert ist.

5. Fahrzeugdach nach einem der vorhergehenden Ansprüche,
**dadurch gekennzeichnet, dass** an der Oberseite der Dachplatte (12) eine als Antennenverkleidung oder als Antennenhalterung dienende Aufwölbung (50) angeformt ist.

6. Fahrzeugdach nach einem der vorhergehenden Ansprüche mit einer Dachplatte (12) aus Kunststoff, die eine Dachfläche zwischen Seitenholmen (17, 18) abdeckt,
**dadurch gekennzeichnet, dass** die Dachplatte (12) einen nicht-transparenten Bereich (23) aufweist, an dessen Unterseite ein Aufnahmerahmen (24) für ein Funktionselement (20) angeformt ist.

7. Fahrzeugdach nach Anspruch 2, 6 oder einem der Ansprüche 3 bis 5 unter Rückbeziehung auf Anspruch 2,
**dadurch gekennzeichnet, dass** das Funktionselement (20) eine Bedienungskonsole (27), eine Beleuchtungseinrichtung (28) oder eine Ablage umfasst.

8. Fahrzeugdach nach Anspruch 2, 6, 7 oder einem der Ansprüche 3 bis 5 unter Rückbeziehung auf Anspruch 2,
**dadurch gekennzeichnet, dass** das Funktionselement (20) in dem Aufnahmerahmen (24) einrastbar ist.

9. Fahrzeugdach nach Anspruch 2, 6, 7, 8 oder einem der Ansprüche 3 bis 6 unter Rückbeziehung auf Anspruch 2,
**dadurch gekennzeichnet, dass** das Funktionselement (20) bei seinem vorderen Ende (21) an der Vorderseite (25) des Aufnahmerahmens (24) angelenkt ist, wobei das hintere Ende (22) des Funktionselements (20) nach unten schwenkbar ist.

10. Fahrzeugdach nach einem der vorhergehenden Ansprüche, mit einem öffnungsfähigen Deckel (32) sowie einem Windlauf (35) aus Kunststoff, wobei an dem Windlauf (35) mindestens ein Windabweiser (36) angeformt ist.

11. Fahrzeugdach nach einem der Ansprüche 3 oder 10,
**dadurch gekennzeichnet, dass** der Windlauf (35) einstückig mit der Frontscheibe (11) ausgebildet ist.

12. Fahrzeugdach nach einem der vorhergehenden Ansprüche, mit einem öffnungsfähigen Deckel (32),
**dadurch gekennzeichnet, dass** der Deckel (32) aus Kunststoff geformt ist und an seiner Oberseite eine Wasserabführungseinrichtung (40) integriert ist.

13. Fahrzeugdach nach einem der Ansprüche 4 und 12 oder einem der Ansprüche 5 bis 9 unter Rückbeziehung auf Anspruch 4,
**dadurch gekennzeichnet, dass** die Wasserabführungseinrichtung (40) einen am vorderen Ende (33) des Deckels (32) nach oben ragenden, sich in Fahrzeugquerrichtung erstreckenden angeformten Wulst (42) umfasst.

14. Fahrzeugdach nach Anspruch 13,
**dadurch gekennzeichnet, dass** sich an den beiden Querenden des Wulstes (42) Wulstfortsätze (43, 44) anschließen, die sich in Fahrzeuglängsrichtung erstrecken und deren Oberseite nach hinten hin nach unten in die Oberseite des Deckels (32) übergeht.

15. Fahrzeugdach nach einem der Ansprüche 4 und 12 bis 14 oder einem der Ansprüche 5 bis 9 unter Rückbeziehung auf Anspruch 4,
**dadurch gekennzeichnet, dass** im Bereich des hinteren Endes (34) des Deckels (32) eine in Fahrzeugquerrichtung verlaufende Wasserrinne (46) vorgesehen ist.

16. Fahrzeugdach mit einer Dachplatte (12) aus Kunststoff,
**dadurch gekennzeichnet, dass** an der Oberseite der Dachplatte (12) eine als Antennenverkleidung oder als Antennenhalterung dienende Aufwölbung (50) angeformt ist.

17. Fahrzeugdach nach einem der vorhergehenden Ansprüche,
**dadurch gekennzeichnet, dass** der Kunststoff ein Polycarbonat ist.

## Claims

1. Vehicle roof with a roof panel (12) which has a transparent region (13) made of plastic, onto which there is moulded a downwardly extending, encircling edge (14), which is made of plastic and serves in particular as a covering screen and is integrated integrally in the roof panel, wherein a receiving and guiding arrangement (15) for a sun protection arrangement (19) is integrated in the edge (14), said sun protection arrangement being adjustable by means of a movement mechanism between an open position outwardly opening up the view through the transparent region (13) and a closed position reducing the insolation of sunlight through the transparent region (13) into the vehicle interior, wherein the edge (14) covers the movement mechanism of the sun protection arrangement (19), Lhe edge (14) surrounds the transparent region (13), and the receiving and guiding arrangement (15) is designed as an encircling groove (16) in the edge (14).

2. Vehicle roof according to Claim 1, **characterized in that** the roof panel (12) has a non-transparent region (23), onto the lower side of which a receiving frame (24) for a functional element (20) is moulded.

3. Vehicle roof according to either of the preceding claims, **characterized in that** it has an operable cover (32) and a cowl (35) made of plastic, wherein at least one draught deflector (36) is moulded on the cowl (35).

4. Vehicle roof according to one of the preceding claims, **characterized in that** it has an openable cover (32) made of plastic, on the upper side of which a water-removing device (40) is integrated.

5. Vehicle roof according Lo one of the preceding claims, **characterized in that** an arching (50) serving as an antenna cladding or as an antenna holder is moulded on the upper side of the roof panel (12).

6. Vehicle roof according to one of the preceding claims with a roof panel (12) made of plastic, which covers a roof surface between side struts (17, 18), **characterized in that** the roof panel (12) has a non-transparent region (23), onto the lower side of which a receiving frame (24) for a functional element (20) is moulded.

7. Vehicle roof according to Claims 2 and 6 or one of Claims 3 to 5 with reference back to Claim 2, **characterized in that** the functional element (20) comprises an operating console (27), an illuminating device (28) or a tray.

8. Vehicle roof according to Claims 2, 6 and 7 or one of Claims 3 to 5 with reference back to Claim 2, **characterized in that** the functional element (20) can be latched in the receiving frame (24).

9. Vehicle roof according to Claims 2, 6, 7 and 8 or one of Claims 3 to 6 with reference back to Claim 2, **characterized in that** the functional element (20) is coupled at the front end (21) thereof to the front side (25) of the receiving frame (24), wherein the rear end (22) of the functional element (20) can be pivoted downwards.

10. Vehicle roof according to one of the preceding claims, with an openable cover (32) and a cowl (35) made of plastic, wherein at least one draught deflector (36) is moulded on the cowl (35).

11. Vehicle roof according to either of Claims 3 and 10, **characterized in that** the cowl (35) is formed integrally with the windscreen (11).

12. Vehicle roof according to one of the preceding claims, with an openable cover (32), **characterized in that** Lhe cover (32) is formed from plastic and a water-removing device (40) is integrated on the upper side thereof.

13. Vehicle roof according to either of Claims 4 and 12 or one of Claims 5 to 9 with reference back to Claim 4, **characterized in that** the water-removing device (40) comprises a moulded-on bead (42) which protrudes upwards at Lhe front end (33) of the cover (32) and extends in the transverse direction of the vehicle.

14. Vehicle roof according to Claim 13, **characterized in that** the two transverse ends of the bead (42) are adjoined by bead extensions (43, 44) which extend in the longitudinal direction of Lhe vehicle and the upper side of which merges rearwards and downwards into the upper side of the cover (32).

15. Vehicle roof according to one of Claims 4 and 12 to 14 or one of Claims 5 to 9 with reference back to Claim 4, **characterised in that** a water channel (46) running in the transverse direction of the vehicle is provided in the region of the rear end (34) of the cover (32).

16. Vehicle roof with a roof panel (12) made of plastic, **characterized in that** an arching (50) serving as an antenna cladding or as an antenna holder is moulded on the upper side of the roof panel (12).

17. Vehicle roof according to one of the preceding claims, **characterized in that** the plastic is a polycarbonate.

## Revendications

1. Toit de véhicule comprenant un panneau de toit (12),
qui présente une région transparente (13) en plastique, sur laquelle est façonné un bord (14) en plastique périphérique, intégré d'une seule pièce dans le panneau de toit, s'étendant vers le bas et servant notamment de bandeau de recouvrement, un agencement de réception et de guidage (15) pour un agencement de protection solaire (19) étant intégré dans le bord (14), lequel peut être déplacé au moyen d'un mécanisme de déplacement entre une position d'ouverture permettant de voir à l'extérieur à travers la région transparente (13) et une position de fermeture réduisant la pénétration des rayonnements solaires à travers la région transparente (13) à l'intérieur du véhicule, le bord (14) recouvrant le mécanisme de déplacement de l'agencement de protection solaire (19), le bord (14) entourant la région transparente (13) et l'agencement de réception et de guidage (15) étant réalisé sous forme de rainure périphérique (16) dans le bord (14).

2. Toit de véhicule selon la revendication 1, **caractérisé en ce que** le panneau de toit (12) présente une région (23) non transparente sur le côté inférieur de laquelle est façonné un cadre de réception (24) pour un élément fonctionnel (20).

3. Toit de véhicule selon l'une quelconque des revendications précédentes, **caractérisé en ce qu'**il présente un couvercle (32) ouvrant ainsi qu'un auvent (35) en plastique, au moins un déflecteur d'air (36) étant façonné sur l'auvent (35).

4. Toit de véhicule selon l'une quelconque des revendications précédentes, **caractérisé en ce qu'**il présente un couvercle (32) ouvrant en plastique sur le côté supérieur duquel est intégré un dispositif d'évacuation d'eau (40).

5. Toit de véhicule selon l'une quelconque des revendications précédentes, **caractérisé en ce qu'**un bombement (50) servant d'habillage d'antenne ou de fixation d'antenne est façonné sur le côté supérieur du panneau de toit (12).

6. Toit de véhicule selon l'une quelconque des revendications précédentes, comprenant un panneau de toit (12) en plastique, qui recouvre une surface de toit entre des longerons latéraux (17, 18), **caractérisé en ce que** le panneau de toit (12) présente une région (23) non transparente sur le côté inférieur de laquelle est façonné un cadre de réception (24) pour un élément fonctionnel (20).

7. Toit de véhicule selon la revendication 2, 6 ou selon l'une quelconque des revendications 3 à 5 lorsqu'elles se rapportent à la revendication 2, **caractérisé en ce que** l'élément fonctionnel (20) comprend une console de commande (27), un dispositif d'éclairage (28) ou un rangement.

8. Toit de véhicule selon la revendication 2, 6, 7 ou selon l'une quelconque des revendications 3 à 5 lorsqu'elles se rapportent à la revendication 2, **caractérisé en ce que** l'élément fonctionnel (20) peut être encliqueté dans le cadre de réception (24).

9. Toit de véhicule selon la revendication 2, 6, 7, 8 ou selon l'une quelconque des revendications 3 à 6 lorsqu'elles se rapportent à la revendication 2, **caractérisé en ce que** l'élément fonctionnel (20) est articulé au niveau de son extrémité avant (21) au côté avant (25) du cadre de réception (24), l'extrémité arrière (22) de l'élément fonctionnel (20) pouvant pivoter vers le bas.

10. Toit de véhicule selon l'une quelconque des revendications précédentes, comprenant un couvercle (32) ouvrant ainsi qu'un auvent (35) en plastique, au moins un déflecteur d'air (36) étant façonné sur l'auvent (35).

11. Toit de véhicule selon l'une quelconque des revendications 3 ou 10, **caractérisé en ce que** l'auvent (35) est réalisé d'une seule pièce avec la vitre avant (11).

12. Toit de véhicule selon l'une quelconque des revendications précédentes, comprenant un couvercle (32) ouvrant, **caractérisé en ce que** le couvercle (32) est formé en plastique et un dispositif d'évacuation d'eau (40) est intégré au niveau de son côté supérieur.

13. Toit de véhicule selon l'une quelconque des revendications 4 et 12 ou selon l'une quelconque des revendications 5 à 9 lorsqu'elles se rapportent de la revendication 4, **caractérisé en ce que** le dispositif d'évacuation d'eau (40) comprend un bourrelet (42) façonné saillant vers le haut au niveau de l'extrémité avant (33) du couvercle (32), s'étendant dans la direction transversale du véhicule.

14. Toit de véhicule selon la revendication 13, **caractérisé en ce que** des prolongements de bourrelet (43, 44) se raccordent aux deux extrémités transversales du bourrelet (42), lesquelles s'étendent dans la direction longitudinale du véhicule, et dont le côté supérieur se poursuiL vers l'arrière et vers le bas jusqu'à se fondre avec le côté supérieur du couvercle (32).

15. ToiL de véhicule selon l'une quelconque des revendications 4 et 12 à 14 ou selon l'une quelconque des revendications 5 à 9 lorsqu'elles se rapportent de la revendication 4, **caractérisé en ce que** dans la région de l'extrémité arrière (34) du couvercle (32) est prévue une rigole d'eau (46) s'étendant dans la direction transversale du véhicule.

16. Toit de véhicule comprenant un panneau de toit (12) en plastique, **caractérisé en ce qu'**un bombement (50) servant d'habillage d'antenne ou de fixation d'antenne est façonné sur le côté supérieur du panneau de toit (12).

17. Toit de véhicule selon l'une quelconque des revendications précédentes, **caractérisé en ce que** le plastique est un polycarbonate.
